(19) Europäisches Patentamt

European Patent Office

Office européen des brevets

(11) **EP 1 647 870 A2**

(12) **EUROPÄISCHE PATENTANMELDUNG**

(43) Veröffentlichungstag:
**19.04.2006 Patentblatt 2006/16**

(51) Int Cl.:
***G05D 1/02*** *(2006.01)*

(21) Anmeldenummer: 05108869.8

(22) Anmeldetag: **26.09.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **18.10.2004 DE 102004050690**

(71) Anmelder: **SIEMENS AKTIENGESELLSCHAFT**
**80333 München (DE)**

(72) Erfinder:
• **Bauer, Jochen**
  **88131, Lindau (DE)**
• **Feiten, Wendelin**
  **85579, Neubiberg (DE)**

(54) **Verfahren, Computer-Programm mit Programm-Code-Mitteln, Computer-Programm-Produkt und Gerät zur Modellierung der Umwelt eines autonomen mobilen Systems**

(57) Die Erfindung betrifft ein Verfahren und ein Gerät zur Modellierung der Umwelt eines autonomen mobilen Systems, an dem ein Sensorsystem angebracht ist. Im einzelnen wird eine eindimensionale Kurve (K) mittels des Sensorsystems automatisch bestimmt und eine Mehrzahl von im Wesentlichen zweidimensionalen Umgebungsmodellen (1) an Bahnparameterwerten ($d_i$) in geeigneten Abständen entlang der eindimensionalen Kurve aufgebaut. Mittels des Sensorsystems werden Objekte in einem Bereich entlang der eindimensionalen Kurve detektiert, wobei Information, die auf detektierten Objekten beruhen, in die jeweiligen im Wesentlichen zweidimensionalen Umgebungsmodelle (1) eingetragen werden. Im Anschluss werden die jeweiligen im Wesentlichen zweidimensionalen Umgebungsmodelle auf die eindimensionale Kurve referenziert. Falls ein jeweiliges im Wesentlichen zweidimensionales Umgebungsmodell Einträge von Objekt-Information enthält, die innerhalb eines Bereichs liegen, der durch ein Querschnittsprofil des mobilen Systems definiert ist, wird ein Bremssignal an eine Antriebseinheit des mobilen Systems gesendet.

FIG 1

EP 1 647 870 A2

**Beschreibung**

Die Erfindung betrifft eine Modellierung der Umwelt eines autonomen mobilen Systems mittels eines Umgebungsmodells, das insbesondere bei im Wesentlichen spurgebundenen Fahrzeugen zum Einsatz kommt.

Beim Aufbau von Umgebungsmodellen für mobile Systeme sind herkömmlich Datenstrukturen in Form von Belegungsgittermodellen bekannt, bei denen ein dreidimensionaler Raum in einzelne quaderförmige Zellen meist von gleicher Größe unterteilt wird. Des weiteren sind Modelle mit geometrischen Primitiven bekannt, bei denen geometrische Formen, wie gerade Stücke, ebene Flächenstücke oder allgemein geformte Flächenstücke durch ihre Parameter charakterisiert und ihre Lage und Orientierung im Raum vermerkt werden.

Aus [1] ist eine Belegungswahrscheinlichkeits-Dichteverteilung für Datenstrukturen in Form von im Wesentlichen zweidimensionalen Gittermodellen bekannt. Bei solchen in absoluten Daten formulierten Umgebungsmodellen muss in dem Fall, daß das mobile System sich den durch endliche Zahlenbereiche im Rechnen gegebenen Grenzen des Modells nähert, das Umgebungsmodell in einige Richtungen erweitert, in andere Richtungen dagegen verkürzt werden. Hierzu sind umfangreiche Transformationen der im Umgebungsmodell enthaltenen Daten erforderlich, was zu einem hohen Rechenaufwand und einer entsprechend langen Rechenzeit führt.

Die EP-0 849 138 B1 offenbart ein Verfahren zum Betrieb eines Spur-gebundenen Fahrzeugs auf Strecken mit gefährlichen Abschnitten sowie ein Kontrollsystem hierfür. Ein solches Verfahren stellt jedoch darauf ab, dass sich eine Bedienperson dauerhaft auf dem Fahrzeug befindet und einen Bereich vor dem Fahrzeug überwacht. Somit eignet sich das Verfahren dieses europäischen Patents nicht ohne weiteres für einen fahrerlos Spur-gebundenen Verkehr.

Aus der DE 197 21 901 AI ist ein Verfahren und eine Vorrichtung zur Hinderniserkennung auf Bahngleisen mit einem Fahrzeug-basierten Radarsystem bekannt. Dieses Verfahren und diese Vorrichtung kommen jedoch nur bei einem Schienenfahrzeug zum Einsatz, das auf Fahrwegen betrieben wird, welche vorab mit Radar-Reflektoren ausgestattet wurden.

Das US-Patent Nr. 5 638 078 offenbart eine Anordnung zur Bereitstellung einer Kommunikationsverbindung und einer Führungsinstallation. Durch eine Kommunikation zwischen einer mobilen Einheit und Basisstationen mittels eines mobilen Funksystems (DECT) wird die momentane Position der mobilen Einheit mit einer großen Genauigkeit bestimmt. Die mobile Einheit verfügt jedoch über kein Sensorsystem, um eventuelle Hindernisse entlang der Fahrtstrecke zu erkennen.

Entsprechend liegt der Erfindung die Aufgabe zugrunde, ein Verfahren und ein Gerät zur Modellierung der Umwelt eines autonomen mobilen Systems bereitzustellen, damit dass ein sicherer und effizienter Bewegungsablauf des mobilen Systems gewährleistet ist.

Diese Aufgabe wird durch ein Verfahren gemäß Patentanspruch 1, durch ein Computer-Programm mit Programm-Code-Mitteln gemäß Patentanspruch 16, durch ein Computer-Programm-Produkt gemäß Patentanspruch 18 und durch ein Gerät gemäß Patentanspruch 19 gelöst.

Bei dem erfindungsgemäßen Verfahren zur Modellierung der Umwelt eines autonomen mobilen Systems, an dem ein Sensorsystem angebracht ist, wird eine Mehrzahl von im Wesentlichen zweidimensionalen Umgebungsmodellen in geeigneten Abständen entlang einer eindimensionalen Kurve aufgebaut, welche einen Fahrweg des autonomen mobilen Systems repräsentiert. Des weiteren werden Objekte in einem Bereich entlang der eindimensionalen Kurve mittels des Sensorsystems detektiert, wobei Informationen, die auf detektierten Objekten beruhen, in die jeweiligen im Wesentlichen zweidimensionalen Umgebungsmodelle eingetragen werden. Schließlich werden die jeweiligen im Wesentlichen zweidimensionalen Umgebungsmodelle auf die eindimensionale Kurve referenziert.

Die eindimensionale Kurve verläuft in einem zumindest zweidimensionalen Raum, d.h. in einer Ebene. Zweckmäßigerweise verläuft die eindimensionale Kurve jedoch im allgemeinen in einem dreidimensionalen Raum, so dass Höhenunterschiede in Bezug auf den Verlauf der eindimensionalen Kurve berücksichtigt werden können. Die eindimensionale Kurve erfasst hierbei den wesentlichen Bewegungsfreiheitsgrad des mobilen Systems.

In Abhängigkeit der Ausgestaltung des autonomen mobilen Systems kann die eindimensionale Kurve durch verschiedene Streckenelemente gegeben sein. Handelt es sich bei dem mobilen System beispielsweise um eine Eisenbahn, so ist die eindimensionale Kurve durch die Gleismitte gegeben, wobei die Welt entlang des Gleises ausgebreitet wird. Bei Kraftfahrzeugen oder dergleichen wird die Welt entlang der Straße ausgebreitet, wobei die eindimensionale Kurve durch die Straßenmitte gegeben sein kann. Des weiteren kann die eindimensionale Kurve bei Transport-Robotern oder dergleichen in Korridorsystemen durch den Korridor selbst oder eine Mitte des Korridors gegeben sein. Für den Fall, dass die eindimensionale Kurve selbst im dreidimensionalen Raum verläuft, kann die eindimensionale Kurve auch als eine einparametrige Kurve bezeichnet werden.

Entlang der eindimensionalen Kurve werden in geeignet gewählten Abständen, vorzugsweise in zueinander konstanten Abständen, im Wesentlichen zweidimensionale Umgebungsmodelle aufgebaut. Ein solches im Wesentlichen zweidimensionales Umgebungsmodell erfasst einen Ausschnitt der dreidimensionalen Welt, die lokal in Richtung der eindimensionalen Kurve eine sehr geringe Ausdehnung hat, verglichen mit der Ausdehnung orthogonal zu der eindimensionalen Kurve. Die Referenzierung der Umgebungsmodelle auf die eindimensionale Kurve kann vorteilhaft durch die Beschreibung der Lage und der Orientierung eines lokalen Ursprungs jedes der im Wesentlichen zweidimensionalen Umgebungsmodell in Bezug auf die eindimensionale Kurve, die vorzugsweise im dreidimensionalem Raum verläuft, erfolgen. Im einfachsten Fall liegt dabei der Ursprung des i-ten im Wesentlichen zweidimensionalen Umgebungsmodells auf der Kurve und entspricht somit einem Wert $d_i$ des Kurvenparameters. Die Koordinatenachsen eines jeweiligen Umgebungsmodells können dabei in folgender Weise gewählt werden: x-Achse als Tangente an die eindimensionale Kurve, y-Achse und z-Achse orthogonal dazu.

Der Verlauf der eindimensionalen Kurve kann vorab bekannt sein, was insbesondere bei Eisenbahngleisen möglich ist. Hierbei kann die eindimensionale Kurve aus einem vorgegebenen Modell, z.B. einer Karte, übernommen werden. In diesem Fall ist es zweckmäßig, eine Momentan-Position des mobilen Systems beispielsweise mittels einer GPS-Einrichtung oder dergleichen zu bestimmen, so dass ausgehend von der augenblicklichen geographischen Position des mobilen Systems der weitere Verlauf der eindimensionalen Kurve, wie zum Beispiel ein Gleisverlauf, geeignet von einer Speichereinheit abrufbar ist, in der der Gleisverlauf vorab entsprechend gespeichert ist.

Andererseits ist es für den Fall, dass der Verlauf der eindimensionalen Kurve im voraus nicht bekannt ist, erforderlich, dass die eindimensionale Kurve mittels des Sensorsystems automatisch bestimmt wird. In vorteilhafter Weiterbildung der Erfindung kann das Sensorsystem hierzu zumindest einen Radarsensor, zumindest einen Lasersensor und/oder zumindest einen Videosensor umfassen. Falls im Fahrbetrieb des mobilen Systems zumindest ein jeweiliger Sensor in einer Ebene im Wesentlichen parallel zu der eindimensionalen Kurve und orthogonal zu dem im Wesentlichen zweidimensionalen Umgebungsmodellen verschwenkt wird, ist ein "vorausschauendes" Bestimmen der eindimensionalen Kurve sichergestellt, was sich insbesondere bei einem abrupten Abknicken des Verlaufs der eindimensionalen Kurve auszahlt.

Die Ebene, in der ein jeweiliger Sensor hin und her verschwenkt wird und die orthogonal zu den im Wesentlichen zweidimensionalen Umgebungsmodellen ist, kann somit im Wesentlichen parallel zu einer Untergrundoberfläche oder im Wesentlichen orthogonal zur Untergrundoberfläche sein.

Objekte, die in einem Bereich entlang der eindimensionalen Kurve, d.h. auf oder an der Fahrtstrecke des mobilen Systems liegen, werden durch das Sensorsystem geeignet detektiert, wobei Informationen, die auf detektierten Objekten beruhen, in die jeweiligen im Wesentlichen zweidimensionalen Umgebungsmodelle eingetragen werden. Durch das Referenzieren der jeweiligen im Wesentlichen zweidimensionalen Umgebungsmodelle werden die detektierten Objekte in Bezug zu der eindimensionalen Kurve gebracht. Eine Kombination dreier sich ergänzender Sensorik-Prinzipien in Form eines Radarsensors, eines Lasersensors und eines Videosensors verbindet dabei eine Wetter-unabhängige weit reichende "Fernsicht" mit einer Exaktheit im Nahbereich. Durch ein geeignetes Verschwenken der jeweiligen Sensoreinrichtungen in der Ebene, die im Wesentlichen parallel zu der eindimensionalen Kurve und orthogonal zu den im Wesentlichen zweidimensionalen Umgebungsmodellen ist, ist darüber hinaus auch ein Detektieren von plötzlich auftretenden Objekten im Nahbereich und/oder in einem Seitenbereich vor dem mobilen System sichergestellt.

In vorteilhafter Weiterbildung der Erfindung bleiben die Einträge der Objekt-Information in den jeweiligen im Wesentlichen zweidimensionalen Umgebungsmodellen invariant. Somit bleiben alle Einträge von Objekt-Information in den jeweiligen Umgebungsmodellen erhalten, wobei bei veränderlicher Position des mobilen Systems entlang der eindimensionalen Kurve kein Umkopieren bzw. keine Transformation von bestehenden Einträgen in den jeweiligen Umgebungsmodellen notwendig ist. Der erforderliche Rechenaufwand bei Ausführung des Verfahrens bleibt somit vorteilhaft klein.

Bei im Stand der Technik bekannten Umgebungsmodellen, die lediglich in absoluten Koordinaten formuliert sind, muss das Umgebungsmodell bei einer Annäherung des mobilen Systems an die durch endliche Zahlenbereiche in einem Rechner gegebenen Grenzen des Modells in einige Richtungen erweitert, in andere Richtungen dagegen verkürzt werden. Dabei sind in der Regel umfangreiche Transformationen der im Umgebungsmodell enthaltenen Daten erforderlich. Im Gegensatz zu anderen Umgebungsmodellen dieser Art sind bei der erfindungsgemäßen Lösung keine solche Transformationen erforderlich. Ein Hauptvorteil der erfindungsgemäßen Lösung besteht somit darin, dass eine Aktualisierung des Weltmodells im Verlauf der Bewegung des mobilen Systems entlang der eindimensionalen Kurve einen nur geringen Aufwand erfordert. Wie voranstehend bereits erläutert, werden die Sensor-Informationen, die auf detektierten Objekten beruhen, in die im Wesentlichen zweidimensionalen Umgebungsmodelle eingetragen, wobei erst durch das Referenzieren eines jeweiligen im Wesentlichen zweidimensionalen Umgebungsmodells auf die zum Beispiel im dreidimensionalen Raum verlaufende eindimensionale Kurve eine vollständige dreidimensionale Information des Umgebungsmodells gewonnen wird. Daraus folgt, dass die jeweiligen im Wesentlichen zweidimensionalen Umgebungsmodelle selbst gegenüber einer Bewegung des mobilen Systems entlang der eindimensionalen Kurve invariant bleiben können. Weder diese im Wesentlichen zweidimensionalen Umgebungsmodelle noch ihre Referenzierung auf die eindimensionale Kurve müssen aufgrund einer Bewegung des mobilen Systems entlang der eindimensionalen Kurve aktualisiert werden.

Statt dessen wird lediglich die Position des mobilen Systems in Bezug auf die eindimensionale Kurve aktualisiert.

In vorteilhafter Weiterbildung der Erfindung ist die eindimensionale Kurve mit "unsigned integer", d.h. nicht-negative ganze Zahlen, parametriert, bei denen ein Wertebereich-Überlauf aufgrund einer Bewegung des mobilen Systems entlang der eindimensionalen Kurve ohne zusätzliche Transformationen automatisch richtig behandelt wird. Im Gegensatz hierzu gibt es bei allen anderen Komponenten des Umgebungsmodells keinen Wertebereich-Überlauf. Wenn eines der im Wesentlichen zweidimensionalen Umgebungsmodelle im Fahrtbetrieb des mobilen Systems hinter die Momentan-Position des mobilen Systems zu liegen kommt, wird der entsprechende Speicherplatz freigegeben. Diese Lösung ist auf in absoluten Koordinaten formulierten dreidimensionalen Datenstrukturen, wie zum Beispiel Gitter, wegen des dabei erforderlichen Speicherbedarfs nicht ohne weiteres anwendbar.

In vorteilhafter Weiterbildung der Erfindung können ein Verlauf der eindimensionalen Kurve in einer Ebene bzw. im Raum und/oder die jeweiligen im Wesentlichen zweidimensionalen Umgebungsmodelle mit Zufallsvariablen modelliert werden. Hierbei werden die Messungen zu zwei verschiedenen Zeitpunkten durchgeführt und anschließend tiefpassgefiltert. Die Schätzung der statistischen Momente über die Zeit kann hierbei verbessert werden, wobei im Nachgang auch die Schätzung der relativen Position von Hindernissen, d.h. von detektierten Objekten, zur eindimensionalen Kurve verbessert werden kann. Insgesamt lässt sich hierdurch eine verbesserte Genauigkeit der Modellierung der Umwelt des mobilen Systems erreichen.

In vorteilhafter Weiterbildung der Erfindung kann die eindimensionale Kurve im Raum in einer Umgebung eines Wertes d des Bahnparameters durch ein Polynom der Art

$$d \rightarrow \begin{pmatrix} d \\ p(d) \\ q(d) \end{pmatrix}$$

approximiert sein, wobei p und q Polynome 3. Ordnung in d sind. Ein lokales Koordinatensystem eines jeweiligen Umgebungsmodells kann durch einen Ursprung

$$u_i = \begin{pmatrix} d_i \\ p(d_i) \\ q(d_i) \end{pmatrix}$$

gegeben sein, wobei sich die x-Achse durch

$$e_{x,i} = \begin{pmatrix} d_i \\ p(d_i) \\ q(d_i) \end{pmatrix} \bigg/ \left\| \begin{pmatrix} d_i \\ p(d_i) \\ q(d_i) \end{pmatrix}' \right\|$$

bestimmt, die y-Achse senkrecht zur x-Achse und tangential zu der eindimensionalen Kurve verläuft, und sich die z-Achse durch

$$e_{z,i} = e_{x,i} \times e_{y,i}$$

bestimmt.

In vorteilhafter Weiterbildung der Erfindung sind die im Wesentlichen zweidimensionalen Umgebungsmodelle durch 2-D-Gitterkarten definiert. Diese Gitterkarten repräsentieren ein Volumen zwischen zwei aufeinander folgenden Referenzierungs-punkten, d.h. zwischen den Ebenen $u_i + \lambda \cdot e_{y,i} + \mu \cdot e_{z,i}$ und $u_{i+1} + \lambda \cdot e_{y,i+1} + \mu \cdot e_{z,i+1}$. Durch die Gitterkarten der jeweiligen Umgebungsmodelle ist ein diskretes Modell gegeben, in dessen Bereiche die Information von detektierten Objekten eingetragen wird. In einer weiteren vorteilhaften Ausführungsform der Erfindung können die im Wesentlichen zweidimensionalen Umgebungsmodelle anstatt durch Gitterkarten auch jeweils durch einen Polygonzug definiert sein. Ein solcher Polygonzug beschreibt somit das Lichtraumprofil entlang der eindimensionalen Kurve bzw. entlang der Fahrtstrecke des mobilen Systems, und ist dabei als kontinuierliches Modell zu verstehen.

In vorteilhafter Weiterbildung der Erfindung kann an eine Antriebseinheit des mobilen Systems ein Bremssignal gesendet werden, falls ein im Wesentlichen zweidimensionales Umgebungsmodell Einträge von Objekt-Informationen enthält, die innerhalb eines Bereichs liegen, der durch ein Querschnittsprofil des mobilen Systems definiert ist. Vorteilhaft hierbei ist, dass die bis zu einer Kollision zurückzulegende Fahrtstrecke des mobilen Strecke genau der Bahnlänge entspricht, die das mobile System entlang der eindimensionalen Kurve von der aktuellen Position bis zum Ursprung desjenigen im Wesentlichen zweidimensionalen Umgebungsmodells zurücklegen muss, in dem das entsprechende Hindernis bzw. das detektierte Objekt eingetragen wurde. Somit ist der euklidische Abstand zwischen dem mobilen System und dem detektierten Objekt für eine Beurteilung, ob ein Bremssignal an die Antriebseinheit des mobilen Systems gesendet wird, nicht relevant.

Bei einer Bereitstellung der im Wesentlichen zweidimensionalen Umgebungsmodelle durch 2-D-Gitterkarten als ein diskretes Modell werden auf detektierten Objekten beruhende Informationen in ein entsprechendes Segment des diskreten Modells eingetragen, wobei anschließend bestimmt wird, ob dieses Segment in dem durch das Querschnittsprofil des mobilen Systems definierten Bereich liegt oder nicht. Bemessungsgrundlage für das Auslösen eines Bremssignals ist hierbei nicht die exakte räumliche Position des detektierten Objekts, sondern vielmehr das Segment eines jeweiligen im Wesentlichen zweidimensionalen Umgebungsmodells, in dem das detektierte Objekt liegt. Somit hat die Bereitstellung der im Wesentlichen zweidimensionalen Umgebungsmodelle in Form der Gitterkarten den Nachteil einer nicht ganz exakten räumlichen Bestimmung von detektierten Objekten, was jedoch im Gegenzug durch einen geringeren Rechenaufwand und damit eine kürzere erforderliche Rechenzeit aufgewogen wird. Im Vergleich hierzu bietet die Bereitstellung der im Wesentlichen zweidimensionalen Umgebungsmodelle jeweils durch einen Polygonzug eine größere Genauigkeit der räumlichen Bestimmung von detektierten Objekten entlang der eindimensionalen Kurve. Hierbei wird jede auf einem detektierten Objekt beruhende Information als ein Punkt in das im Wesentlichen zweidimensionale Umgebungsmodell eingetragen, und anschließend verglichen, ob dieser Punkt innerhalb des durch das Querschnittsprofil des mobilen Systems definierten Bereich liegt oder nicht. Bejahendenfalls wird das Bremssignal an die Antriebseinheit des mobilen Systems gesendet.

Das erfindungsgemäße Computer-Programm weist Programm-Code-Mittel auf, um alle Schritte des voranstehend beschriebenen Verfahrens durchzuführen. Dieses Computer-Programm wird auf einem Computer oder einer entsprechenden Recheneinheit, typischerweise einer Recheneinheit in der elektronischen Einheit, zur Ausführung gebracht.

Das erfindungsgemäße Computer-Programm-Produkt weist Programm-Code-Mittel auf, die auf einem Computer-lesbaren Datenträger gespeichert sind, um das voranstehend beschriebene Verfahren durchzuführen. Die Programm-Code-Mittel sind vorzugsweise auf einem Computer-lesbaren Datenträger gespeichert. Als geeignete Datenträger können EEPROMs und Flash-Memories, aber auch CD-ROMs, Disketten oder Festplattenlaufwerke verwendet werden.

Das erfindungsgemäße Gerät zur Modellierung der Umwelt eines autonomen mobilen Systems umfasst ein Sensorsystem, das an dem mobilen System angebracht ist, und eine Recheneinheit oder dergleichen, auf der das voranstehend beschriebene Verfahren und/oder das voranstehend genannte Computer-Programm ausführbar ist, wobei die Recheneinheit mit dem Sensorsystem für eine Datenübertragung gekoppelt ist. Des weiteren kann die Recheneinheit das voranstehend genannte Computer-Programm-Produkt umfassen.

In vorteilhafter Weiterbildung des Geräts kann das Sensorsystem zumindest einen Radarsensor, zumindest einen Lasersensor und/oder zumindest einen Videosensor umfassen. Eine Kombination dieser drei sich ergänzenden Sensorik-Prinzipien stellt eine Wetterunabhängige, weit reichende "Fernsicht" in Verbindung mit einer exakten Detektierung von Objekten im Nahbereich des mobilen Systems sicher. Gleiches gilt im übrigen für die Bestimmung des Verlaufs der eindimensionalen Kurve, falls diese vorher nicht bekannt ist. Zweckmäßigerweise wird hierbei zumindest ein jeweiliger Sensor in einer Ebene verschwenkt, die im Wesentlichen parallel zu der eindimensionalen Kurve und orthogonal zu den im Wesentlichen zweidimensionalen Umgebungsmodellen ist. Dadurch ist unter anderem auch eine umfassende Detektion von Objekten in einem seitlichen Nahbereich des mobilen Systems sichergestellt.

Weitere Vorteile, Merkmale und Anwendungsmöglichkeiten der Erfindung ergeben sich aus der nachfolgenden Beschreibung und der beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen zeichnerisch dargestellt und wird im folgenden unter Bezugnahme auf die Zeichnungen näher erläutert.

Es zeigen:

Fig. 1 eine eindimensionale Kurve mit daran entlang angeordneten im Wesentlichen zweidimensionalen Umgebungsmodellen in Form eines diskreten Modells;

Fig. 2 eine eindimensionale Kurve mit daran entlang angeordneten im Wesentlichen zweidimensionalen Umgebungsmodellen in Form eines kontinuierlichen Modells;

Fig. 3 eine Draufsicht auf ein im Wesentlichen zweidimensionales Umgebungsmodell mit darin eingetragenen Objekt-Informationen und einer Projektion eines Querschnitt-Profils eines mobilen Systems;

Fig. 4 eine Anordnung einer Mehrzahl von Sensoreinrichtungen an einem mobilen System;

Fig. 5 die Reichweite von an einem mobilen System angebrachten Sensoreinrichtungen in einer seitlichen Prinzipdarstellung; und

Fig. 6 die Reichweite von an einem mobilen System angebrachten Sensoreinrichtungen in einer prinzipiellen Ansicht von oben.

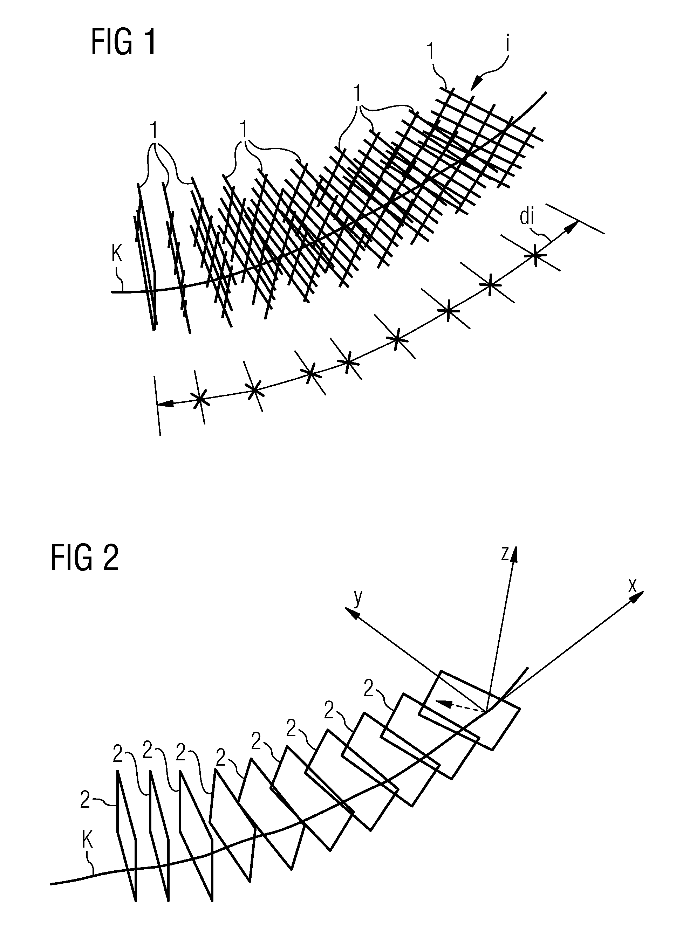

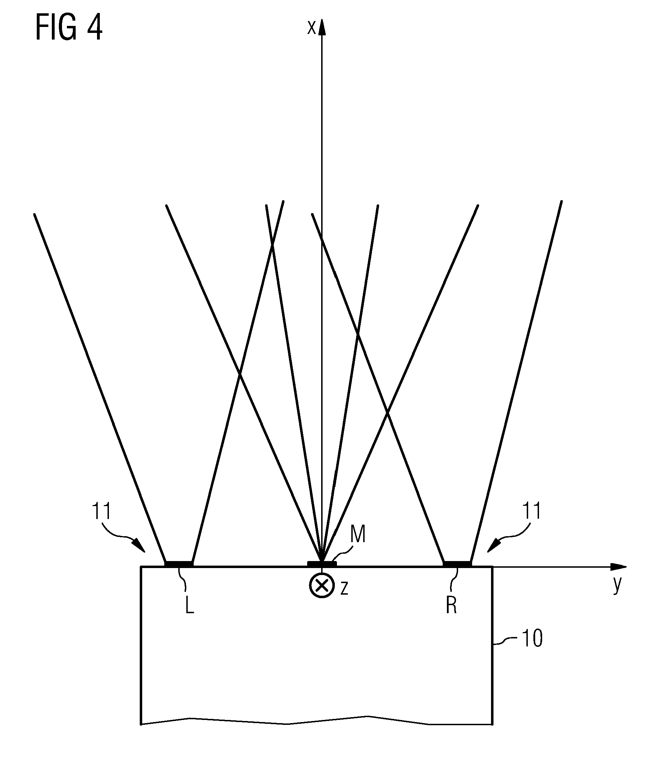

In Fig. 1 ist der Verlauf einer eindimensionalen Kurve K gezeigt, entlang der in konstanten Abständen eine Mehrzahl von im Wesentlichen zweidimensionalen Umgebungsmodellen 1 aufgebaut sind. Die eindimensionale Kurve K verläuft im dreidimensionalen Raum und kann somit als eine einparametrige Kurve verstanden werden. Ein mobiles System 10 (Fig. 4) wird entlang der eindimensionalen Kurve bewegt, so dass der wesentliche Bewegungs-Freiheitsgrad des mobilen Systems von der eindimensionalen Kurve K erfasst wird. Die in Fig. 1 dargestellten im Wesentlichen zweidimensionalen Umgebungsmodelle in Form der Gitterkarten entlang der eindimensionalen Kurve K stellen ein hindernisfrei gefordertes Profil für den Bewegungsablauf des mobilen Systems 10 dar. Anders ausgedrückt wird der Fahrtbetrieb des mobilen Systems 10 entlang der eindimensionalen Kurve nur so lange aufrechterhalten, wie keine Fremdobjekte oder dergleichen vor dem mobilen System detektiert werden, mit denen das mobile System 10 kollidieren könnte. Das Detektieren von Fremdobjekten und die entsprechende Beeinflussung des Fahrtbetriebs des mobilen Systems ist nachstehend noch im einzelnen erläutert.

Die eindimensionale Kurve K kann bei Eisenbahnen durch die Gleismitte, bei Kraftfahrzeugen durch die Straßenmitte und bei Transport-Robotern in Korridorsystemen durch den Korridor bzw. die Mitte des Korridors gegeben sein. Besonders vorteilhaft eignet sich die Erfindung für Eisenbahnen, bei so genannten Mono-Rails, die im Bereich der Logistik eingesetzt werden und/oder auch für spurgebundenen Flurfördersysteme.

Der Verlauf der in Fig. 1 gezeigten eindimensionalen Kurve K kann vor Aufnahme des Fahrtbetriebs des mobilen Systems 10 im voraus bekannt sein. Dies ist insbesondere bei einer eindimensionalen Kurve K in Form eines Eisenbahngleises möglich. Mittels eines GPS-Systems oder dergleichen wird die momentane geographische Position des mobilen Systems 10 ermittelt und an eine (nicht gezeigte) Steuerrecheneinheit ausgegeben. Des weiteren wird der Streckenverlauf der eindimensionalen Kurve aus einer geeigneten Speichereinheit ausgelesen und an die Steuerrecheneinheit ausgegeben. Auf Grundlage dieser Information kann die Steuerrecheneinheit den weiteren Verlauf der eindimensionalen Kurve automatisch bestimmen.

Falls der Verlauf der eindimensionalen Kurve K im voraus nicht bekannt ist, so wird die eindimensionale Kurve K mittels eines Sensorsystems, das an dem mobilen Systems 10 angebracht ist, automatisch bestimmt. Zum automatischen Bestimmen der eindimensionalen Kurve zum Beispiel in Form eines Eisenbahngleises oder dergleichen umfasst das Sensorsystem zweckmäßigerweise einen Videosensor, der einen Gleisverlauf automatisch bestimmt und diese Information an die Steuerrecheneinheit ausgibt. Das Sensorsystem detektiert darüber hinaus Fremdobjekte in einem Bereich entlang der eindimensionalen Kurve vor dem mobilen System 10, wobei Information, die auf detektierten Objekten beruht, in die jeweiligen im Wesentlichen zweidimensionalen Umgebungsmodelle eingetragen werden. In Abhängigkeit von jeweiligen Sensorik-Prinzipien kann das Sensorsystem neben der Lage eines Objektes des weiteren auch die Größe und gegebenenfalls die Dichte eines Objekts bestimmen. Die Gesamtmenge der Informationen über detektierte Objekte wird in die Steuerrecheneinheit eingegeben, um entsprechende Fahrbefehle für das mobile System 10 zu generieren.

Die in Fig. 1 gezeigte eindimensionale Kurve K kann im dreidimensionalen Raum in einer Umgebung eines Wertes d des Bahnparameters durch ein Polynom der Art

$$d \rightarrow \begin{pmatrix} d \\ p(d) \\ q(d) \end{pmatrix}$$

approximiert sein, wobei p und q Polynome 3. Ordnung in d sind. Wie voranstehend bereits erläutert, sind die im Wesentlichen zweidimensionalen Umgebungsmodelle 1 beispielsweise in jeweils konstanten Abständen an Bahnparameterwerten $d_i$ entlang der eindimensionalen Kurve K aufgebaut und werden entsprechend auf die eindimensionale Kurve referenziert. Des weiteren ist ein lokales Koordinatensystem eines jeweiligen Umgebungsmodells 1 gegeben durch den Ursprung

$$u_i = \begin{pmatrix} d_i \\ p(d_i) \\ q(d_i) \end{pmatrix}$$

die x-Achse

$$e_{x,i} = \begin{pmatrix} d_i \\ p(d_i) \\ q(d_i) \end{pmatrix} / \left\| \begin{pmatrix} d_i \\ p(d_i) \\ q(d_i) \end{pmatrix} \right\|$$

die y-Achse senkrecht zur x-Achse und tangential zu der eindimensionalen Kurve k, und durch die z-Achse

$$e_{z,i} = e_{x,i} \times e_{y,i}$$

Das Referenzieren der jeweiligen Umgebungsmodelle 1 auf die eindimensionale Kurve K erfolgt durch die Beschreibung der Lage und der Orientierung des lokalen Ursprungs eines jeweiligen Umgebungsmodells 1 in Bezug auf die eindimensionale Kurve K. Die im Wesentlichen zweidimensionalen Umgebungsmodelle 1 sind Gitterkarten, die das Volumen zwischen zwei aufeinander folgenden Referenzierungs-Punkten, d.h. zwischen den Ebenen

$u_i + \lambda \cdot e_{y,i} + \mu \cdot e_{z,i}$ und $u_{i+1} + \lambda \cdot e_{y,i+1} + \mu \cdot e_{z,i+1}$. Dies bedeutet, dass alle Informationen von Objekten, die zwischen zwei aufeinander folgenden Referenzierungspunkten detektiert werden, in eine nächstliegende Gitterkarte eines entsprechenden Referenzierungspunkts eingetragen werden. Beispielsweise werden alle Informationen von detektierten Objekten, die sich in einem Bereich von 29 bis 29,9 Metern vor dem mobilen System befinden, in die Gitterkarte eines Umgebungsmodells eingetragen, das auf den Bezugspunkt von 29 Metern vor dem mobilen System referenziert wird.

Bei den in Fig. 1 gezeigten Umgebungsmodellen 1 in Form der Gitterkarten handelt es sich jeweils um ein diskretes Modell, bei dem die Fläche des Umgebungsmodells in diskrete Segmente, wie zum Beispiel Rechtecke oder dergleichen, unterteilt ist. Falls durch das Sensorsystem ein Fremdobjekt in einem Bereich entlang der eindimensionalen Kurve K und vor dem mobilen System 10 detektiert wird, wird die entsprechende Information da rüber lediglich in das Segment eingetragen, wenn das die Position des detektierten Objektes fällt. In Fig. 1 ist ein solches Rechtecksegment, in das eine Information über ein detektiertes Objekt eingetragen ist, schraffiert dargestellt und mit dem Bezugszeichen i kenntlich gemacht. Durch die Zuweisung der Information von detektierten Objekten lediglich an ein diskretes Flächensegment der jeweiligen Umgebungsmodelle ist die Bestimmung der Position des detektierten Objektes zwar auf die Genauigkeit des diskreten Modells beschränkt, was jedoch durch einen geringeren Rechenaufwand und somit eine verkürzte Rechenzeit aufgewogen wird.

Die in Fig. 2 dargestellten Umgebungsmodelle 2 sind im Gegensatz zu den Gitterkarten von Fig. 1 als so genanntes kontinuierliches Modell ausgebildet, wobei Informationen von detektierten Objekten in den jeweiligen Umgebungsmodellen 2 durch einen Polygonzug eingetragen werden. Dies hat den Vorteil, dass eine Position von detektierten Fremdobjekten mit einer größeren Genauigkeit berücksichtigt werden kann. In Fig. 2 ist durch einen gestrichelt dargestellten Vektor der Eintrag einer solchen Information in einem der Umgebungsmodelle 2 exemplarisch dargestellt.

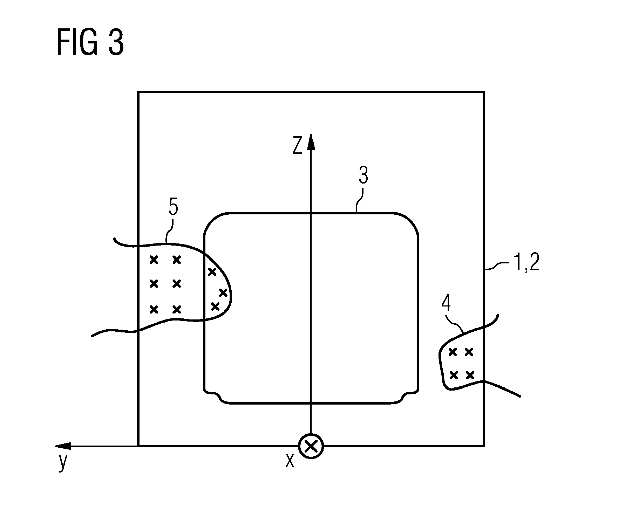

Nachfolgend ist unter Bezugnahme auf Fig. 3 die Auswirkung von detektierten Fremdobjekten in einem Bereich vor dem mobilen System 10 auf den Fahrtbetrieb erläutert.

Fig. 3 zeigt ein Querschnittsprofil 3 des mobilen Systems 10, das in ein im Wesentlichen zweidimensionales Umgebungsmodell 1, 2 hinein projiziert ist. Falls das an dem mobilen System 10 angebrachte Sensorsystem Fremdobjekte vor dem mobilen System in einem Bereich entlang der eindimensionalen Kurve K detektiert, werden die entsprechenden Informationen in ein jeweiliges Umgebungsmodell, abhängig von dem Abstand des detektierten Fremdobjekts von dem mobilen System, eingetragen. Wie voranstehend unter Bezugnahme auf die Fig. 1 und 2 erläutert, kann dies entweder durch einen Eintrag in ein diskretes Flächensegment oder durch die Beschreibung eines Polygonzuges in dem Umgebungsmodell geschehen.

Nach erfolgtem Eintrag wird in einer geeigneten Steuerrecheneinheit überprüft, ob das entsprechende Umgebungsmodell Einträge von Objekt-Informationen enthält, die innerhalb des Bereichs liegen, der durch das Querschnittsprofil 3 des mobilen Systems 10 definiert ist. In der Fig. 3 ist mit dem Bezugszeichen 4 ein Fremdkörper bezeichnet, der sich von rechts in Richtung des mobilen Systems 10 erstreckt. Der Fremdkörper 4 ragt dabei aber nicht in die Projektion des Querschnittsprofils 3 auf das Umgebungsmodell hinein, so dass die Einträge der Information über den Fremdkörper 4 in dem Umgebungsmodell nicht in dem Bereich liegen, der durch das Querschnittsprofil 3 definiert ist. Somit stellt der Fremdkörper 4 keine Störung des Fahrtbetriebs des mobilen Systems 10 entlang der eindimensionalen Kurve K (x-Achse in Fig. 3) dar. Im Unterschied hierzu erstreckt sich in der Fig. 3 von links ein weiterer Fremdkörper 5 in Richtung des Querschnittsprofils 3 des mobilen Systems soweit, dass die Einträge der Informationen auf Grundlage des detektierten Fremdkörpers 5 innerhalb eines Bereichs des Umgebungsmodells liegen, der durch das Querschnittsprofil 3 definiert ist. Dies bedeutet, dass bei einer unveränderten Bewegung des mobilen Systems 10 entlang der eindimensionalen Kurve eine Kollision des mobilen Systems 10 mit dem Fremdkörper 5 eintreten würde. Wird von der Steuerrecheneinheit oder dergleichen eine solche Störung festgestellt, so wird an eine Antriebseinheit des mobilen Systems ein Bremssignal gesendet, damit die Bewegung des mobilen Systems 10 verzögert wird und nach Möglichkeit vor einer Kollision mit dem Fremdkörper 5 zum Stillstand kommt. Ergänzend hierzu kann die Steuerrecheneinheit ein Warnsignal erzeugen, das an eine Zentralstelle für den Fahrtbetrieb ausgegeben wird. Des weiteren kann gegebenenfalls auch ein Kamerabild eines Videosensors an eine Verkehrsleitstelle oder dergleichen des mobilen Systems gesendet werden.

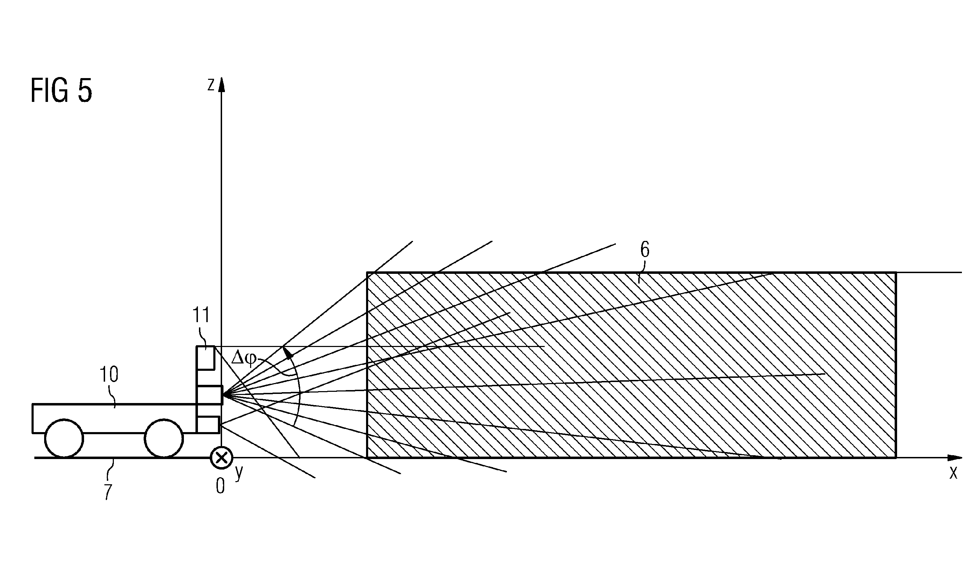

In Fig. 4 ist in einer vereinfachten Prinzip-Ansicht eine Anordnung eines Sensorsystems 11 an einer Stirnseite des mobilen Systems 10 in einer Draufsicht von oben gezeigt. Das Sensorsystem 11 umfasst hierbei verschiedene Sensoreinrichtungen in einem linken Abschnitt L, in einem mittigen Abschnitt M und in einem rechten Abschnitt R an der Stirnseite des mobilen Systems 10 angebracht. Hierdurch ist eine Erfassung von Objekten entlang einer Breite des mobilen Systems 10 gewährleistet. Darüber hinaus können mehrere Sensoreinrichtungen in dem jeweiligen Bereich L, M und R übereinander angeordnet sein, so dass auch eine Erfassung von Objekten über der Höhe des mobilen Systems 10 sichergestellt ist. Dies wird aus der Seitenansicht des mobilen Systems in Fig. 5 deutlich.

Das Sensorsystem kann in den jeweiligen Bereichen L, M und R zumindest einen Videosensor, zumindest einen Radarsensor und zumindest einen Lasersensor in Form eines Laser-Scanners umfassen. Der Videosensor ist dazu ausgelegt, unter anderem den Verlauf der eindimensionalen Kurve K, zum Beispiel den Gleisverlauf einer Eisenbahnschiene, zu erfassen. Des weiteren können mittels des Videosensors Objekte vor dem mobilen System 10 in einem Nahbereich (z.B. 4 Meter) und/oder in einem Bereich mittlerer Entfernung (z.B. 40 Meter) erkannt werden. Der Radarsensor bzw. der Mikrowellensensor zeichnet sich durch eine hochpräzise Bestimmung der Entfernung zu einem detektierten Objekt und der Relativgeschwindigkeit des mobilen Systems 10 zu dem Objekt aus. Der Radarsensor kann darüber hinaus auch bei Nacht und bei schlechtem Wetter weit entfernte Objekte erkennen und des weiteren diese Objekte auch materialmäßig einordnen. Beispielsweise kann der Radarsensor einen leeren Pappkarton von einem Betonklotz unterscheiden. Im übrigen bietet der Radarsensor den Vorteil eines sehr robusten Aufbaus. Im allgemeinen ist der Einsatz eines Radarsensors beim Einsatz für selbst fahrende Züge für eine automatische Zugzusammenstellung oder auch für ein Kuppeln während der Fahrt zweckmäßig.

Ein Laser-Scanner schließlich kann für die Überwachung des Lichtraumprofils vor dem bewegten mobilen System 10 eingesetzt werden, wobei sich dieser Sensortyp auch für die Messung der Höhe von Objekten über der eindimensionalen Kurve K eignet. Die Kombination dreier sich ergänzender Sensorik-Prinzipien in Form eines Videosensors, eines Radarsensors und eines Lasersensors gewährleistet somit eine Wetter-unabhängige, weit reichende "Fernsicht" in Verbindung mit einer Exaktheit im Nahbereich.

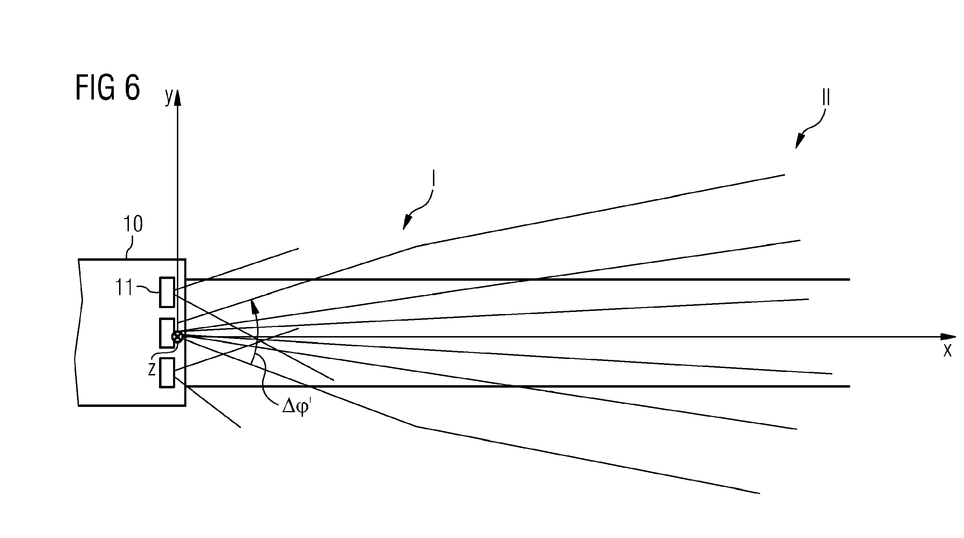

In der Seitenansicht von Fig. 5 ist die Anordnung von mehreren Sensoren übereinander an der Stirnseite des mobilen Systems 10 gezeigt. Ein schraffierter Bereich 6 stellt hierin ein vor dem mobilen System 10 liegendes Lichtraumprofil dar, das durch die Verwendung von mehreren Sensoren des gleichen Messprinzips oder eines jeweils verschiedenen Messprinzips in einer großen Ausdehnung vor dem mobilen System 10 betriebssicher erfasst wird. Ergänzend zu der Anordnung der Sensoren übereinander an der Stirnseite des mobilen Systems können einzelne Sensoren auch um einen Winkel $\Delta\varphi$ in einer Ebene hin und her verschwenkt werden, die orthogonal zu den jeweiligen Umgebungsmodellen und orthogonal zu einer Untergrundoberfläche 7 ist. Die in Fig. 6 gezeigte Draufsicht auf das mobile System verdeutlicht, dass die jeweiligen Sensoren ergänzend auch um den Winkel $\Delta\varphi'$ um eine Rotationsachse verschwenkt werden können, die orthogonal zu der Untergrundoberfläche 7 ist. Durch die Verwendung von mehreren Sensoren, die auf verschiedenen Sensorik-Prinzipien beruhen, lassen sich Fremdkörper vor dem mobilen System 10 in gleicher Weise in einem Nahbereich als auch in einem Fernbereich erfassen, wie dies in Fig. 6 durch die Bereiche I bzw. II kenntlich gemacht ist.

In diesem Dokument sind folgende Schriften zitiert:

[1] Moravec, H. P. und Elfes, A.: "High Resolution Maps from Wide Angle Solar", IEEE International Conference of Robotics and Automation, pages 138-145, 1985;

[2] EP-0 849 138 B1;

[3] DE 197 21 901 A1;

[4] US-A-5 638 078.

**Patentansprüche**

1. Verfahren zur Modellierung der Umwelt eines autonomen mobilen Systems (10), an dem ein Sensorsystem (11) angebracht ist, mit den Schritten:

- Aufbauen einer Mehrzahl von im Wesentlichen zweidimensionalen Umgebungsmodellen (1, 2) in geeigneten Abständen bei bestimmten Bahnparameterwerten ($d_i$) entlang einer eindimensionalen Kurve (K), welche einen Fahrweg des autonomen mobilen Systems (10) repräsentiert,
- Detektieren von Objekten (4, 5) in einem Bereich entlang der eindimensionalen Kurve mittels des Sensorsystems (11), wobei Informationen, die auf detektierten Objekten beruhen, in die jeweiligen im Wesentlichen zweidimensionalen Umgebungsmodelle eingetragen werden, und
- Referenzieren der jeweiligen im Wesentlichen zweidimensionalen Umgebungsmodelle auf die eindimensionale Kurve (K).

2. Verfahren nach Anspruch 1, bei dem die eindimensionale Kurve (K) in einem zumindest zweidimensionalen Raum (R$_2$) verläuft.

3. Verfahren nach Anspruch 1 oder Anspruch 2, bei dem die eindimensionale Kurve (K) mit "unsigned integer" parametriert ist.

4. Verfahren nach einem der Ansprüche 1 bis 3, bei dem das Referenzieren der im Wesentlichen zweidimensionalen Umgebungsmodelle (1, 2) auf die eindimensionale Kurve (K) durch die Beschreibung der Lage und der Orientierung eines lokalen Ursprungs ($\mu_i$) jedes der im Wesentlichen zweidimensionalen Umgebungsmodelle (1, 2) in Bezug auf die eindimensionale Kurve (K) in dem zumindest zweidimensionalen Raum erfolgt.

5. Verfahren nach einem der Ansprüche 1 bis 4, bei dem die Einträge der Information in den jeweiligen im Wesentlichen zweidimensionalen Umgebungsmodellen (1, 2) bei einer Bewegung des mobilen Systems (10) entlang der eindimensionalen Kurve (K) invariant sind.

**6.** Verfahren nach einem der Ansprüche 1 bis 5, bei dem ein Verlauf der eindimensionalen Kurve im Raum und/oder die jeweiligen im Wesentlichen zweidimensionalen Umgebungsmodelle (1, 2) mit Zufallsvariablen modelliert werden.

**7.** Verfahren nach einem der Ansprüche 1 bis 6, bei dem das Referenzieren der im Wesentlichen zweidimensionalen Umgebungsmodelle (1, 2) in konstanten Abständen an Bahnparameterwerten ($d_i$) entlang der eindimensionalen Kurve (K) erfolgt.

**8.** Verfahren nach einem der Ansprüche 1 bis 7, bei dem die eindimensionale Kurve im Raum in einer Umgebung des Bahnparameterwertes d durch ein Polynom der Art

$$d \rightarrow \begin{pmatrix} d \\ p(d) \\ q(d) \end{pmatrix}$$

approximiert wird, wobei p und q Polygone 3. Ordnung in d sind.

**9.** Verfahren nach einem der Ansprüche 1 bis 8, bei dem ein lokales Koordinatensystem eines jeweiligen im Wesentlichen zweidimensionalen Umgebungsmodells gegeben ist durch

- einen Ursprung

$$u_i = \begin{pmatrix} d_i \\ p(d_i) \\ q(d_i) \end{pmatrix}$$

- eine x-Achse

$$e_{x,i} = \begin{pmatrix} d_i \\ p(d_i) \\ q(d_i) \end{pmatrix} \Big/ \left\| \begin{pmatrix} d_i \\ p(d_i) \\ q(d_i) \end{pmatrix}' \right\|$$

- eine y-Achse senkrecht zur x-Achse und tangential zu der eindimensionalen Kurve, und
- eine z-Achse

$$e_{z,i} = e_{x,i} \times e_{y,i}$$

**10.** Verfahren nach einem der Ansprüche 1 bis 9, bei dem die im Wesentlichen zweidimensionalen Umgebungsmodelle (1) durch 2-D-Gitterkarten definiert sind.

**11.** Verfahren nach einem der Ansprüche 1 bis 9, bei dem die im Wesentlichen zweidimensionalen Umgebungsmodelle (2) jeweils durch einen Polygonzug definiert sind.

**12.** Verfahren nach einem der Ansprüche 1 bis 11, bei dem an eine Antriebseinheit des mobilen Systems (10) ein Bremssignal gesendet wird, falls ein im Wesentlichen zweidimensionales Umgebungsmodell (1, 2) Einträge von Objekt-Information enthält, die innerhalb eines Bereichs liegen, der durch ein Querschnittsprofil des mobilen Systems (10) definiert ist.

**13.** Verfahren nach einem der Ansprüche 1 bis 12, bei dem das Sensorsystem (11) zumindest einen Radarsensor, zumindest einen Lasersensor und/oder zumindest einen Videosensor umfasst.

**14.** Verfahren nach Anspruch 13, bei dem zumindest ein jeweiliger Sensor in einer Ebene verschwenkt wird, die im Wesentlichen parallel zu der eindimensionalen Kurve und orthogonal zu dem im Wesentlichen zweidimensionalen Umgebungsmodellen ist.

**15.** Verfahren nach Anspruch 1, bei dem die eindimensionale Kurve (K) aus einem vorgegebenen Modell übernommen oder mittels des Sensorsystems (11) während der Fahrt automatisch bestimmt wird.

**16.** Computer-Programm mit Programm-Code-Mitteln, um alle Schritte eines Verfahrens nach einem der Ansprüche 1 bis 14 durchzuführen, wenn das Computer-Programm auf einem Computer oder einer entsprechenden Recheneinheit ausgeführt wird.

**17.** Computer-Programm mit Programm-Code-Mitteln nach Anspruch 15, welche Programm-Code-Mittel auf einem Computer-lesbaren Datenträger gespeichert sind.

**18.** Computer-Programm-Produkt mit Programm-Code-Mitteln, die auf einem Computer-lesbaren Datenträger gespeichert sind, um ein Verfahren nach einem der Ansprüche 1 bis 14 durchzuführen, wenn das Computer-Programm-Produkt auf einem Computer oder einer entsprechenden Recheneinheit ausgeführt wird.

**19.** Gerät zur Modellierung der Umwelt eines autonomen mobilen Systems (10), mit:

- einem an dem mobilen System (10) angebrachten Sensorsystem (11) ,
- einer Recheneinheit oder dergleichen, auf der das Verfahren nach einem der Ansprüche 1 bis 14 und/oder das Computer-Programm nach Anspruch 15 und/oder Anspruch 16 ausführbar ist, und/oder die ein Computer-Programm-Produkt nach Anspruch 17 umfasst, wobei die Recheneinheit mit dem Sensorsystem für eine Datenübertragung gekoppelt ist.

20. Gerät nach Anspruch 19, bei dem das Sensorsystem (11) zumindest einen Radarsensor, zumindest einen Lasersensor und/oder zumindest einen Videosensor umfasst.

21. Gerät nach Anspruch 20, bei dem zumindest ein jeweiliger Sensor in einer Ebene verschwenkbar ist, die im Wesentlichen parallel zu der eindimensionalen Kurve und orthogonal zu dem im Wesentlichen zweidimensionalen Umgebungsmodellen ist.

FIG 1

FIG 2

# FIG 3

FIG 4

FIG 5

EP 1 647 870 A2

FIG 6

EP 1 647 870 A2